# EUROPEAN PATENT APPLICATION

(11) **EP 2 833 646 A1**
(43) Date of publication of application: **04.02.2015**
(21) Application number: 13767409.9
(22) Date of filing: 28.03.2013
(51) Int. Cl.: H04R 1/10, H04B 7/24

(54) **HEADSET HAVING MOBILE COMMUNICATION TERMINAL LOSS PREVENTION FUNCTION AND HEADSET SYSTEM HAVING LOSS PREVENTION FUNCTION**

(30) Priority: 29.03.2012 KR 20120032104
(71) Applicant: HAEBORA, Seoul 135-845 (KR)
(72) Inventor: SHIN, Doo Sik, Seoul 158-770 (KR)
(74) Representative: Vossius & Partner
(86) International application number: PCT/KR2013/002574
(87) International publication number: WO 2013/147521

(57) **Abstract**

Each of a mobile communication terminal (100) and a headset (200) in the present invention measures the distance to another wirelessly connected device and determines whether the other device is lost. According to the present invention, the mobile communication terminal (100) in a headset system having a loss prevention function comprises: a first communication module (110) for forming a communication channel with the headset (200); a first breakaway analyzing unit (120) analyzes whether the headset (200) breaks away at a standard distance loss from a location of the mobile communication terminal (100) by analyzing a sensitivity signal delivered via the first communication module (110); and a first breakaway warning unit (140) for warning a user of a breakaway by using at least one of a vibration signal, a sound signal, or an image signal when analysis reveals that the headset (200) has broken away at the standard distance loss from the first breakaway analyzing unit (120). The headset (200) having a mobile communication terminal (100) loss prevention function according to the present invention comprises: a second communication module (210) for forming a communication channel with the mobile communication terminal (100); the second breakaway analyzing unit (220) for analyzing whether the mobile communication terminal (100) breaks away at the standard loss distance from the location of the headset (200) by analyzing a sensitivity signal delivered via the second communication module (210); and a second breakaway warning unit (240) for warning the user of a breakaway when analysis reveals that the mobile communication terminal (100) has broken away from the standard loss distance.

## Description

### [Technical Field]

The present invention relates to a headset having a loss prevention function for a mobile communication terminal and a headset system having a loss prevention function for each of the mobile communication terminal and the headset, and more particularly to a headset and a headset system for performing a loss prevention function by using a signal for checking communication sensitivity in the mobile communication terminal and the headset which are connected wirelessly.

### [Background Art]

With rapid development of devices and resulting development of software, a mobile communication terminal has been developed to additionally include various option functions to meet the demands of many users with an increase in pocketability. Further, recently, with the advent of smartphones, a product having various functions such as MP3 playback, video playback and navigation using a Global Positioning System (GPS) has been released.

Bluetooth technology has been used most commonly as a communication method for connecting a mobile communication terminal with a peripheral device such as a headset. Currently, in most cases, the mobile communication terminal is mounted with a Bluetooth chip.

The mobile communication terminal is basically equipped with a high resolution camera, MP3 function, Bluetooth function and the like, and uses an expensive central processing unit (CPU) in order to increase a processing speed, thereby resulting in an increase in manufacturing cost of the mobile communication terminal. Currently, the mobile communication terminal (smartphone) has become an expensive product priced from hundreds of thousands of won to millions of won. Thus, it causes anxiety about loss of the mobile communication terminal, and it is necessary to seek a method to prevent the loss of the mobile terminal.

Also in the headset, an increase in production/manufacturing cost due to mounting a Bluetooth chip is inevitable. That is, the headset is also an expensive device compared to a conventional general wired headset or earphones. Thus, it is necessary to seek various methods to prevent the loss of the headset.

### [Disclosure]

### [Technical Problem]

In view of the above, the present invention provides a headset having a loss prevention function for a mobile communication terminal and a headset system having a loss prevention function.

A first object of the present invention is to perform a mobile communication terminal and/or headset loss prevention function by using a signal for checking wireless communication sensitivity between the mobile communication terminal and the headset.

A second object of the present invention is to allow each of the mobile communication terminal and the headset which are connected by one pairing for Bluetooth communication to perform a loss prevention function for the other device.

A third object of the present invention is to perform a mobile communication terminal and/or headset loss prevention function by using each of a vibration signal, a sound signal and an image signal, or a combined signal.

However, objects of the present invention are not restricted to the one set forth herein. The above and other objects of the present invention will become more apparent to one of ordinary skill in the art to which the present invention pertains by referencing the detailed description of the present invention given below.

### [Technical Solution]

In accordance with an aspect of the present invention, there is provided a

### [Advantageous Effects]

A headset having a loss prevention function for a mobile communication terminal and a headset system having a loss prevention function according to the present invention measures a distance between the mobile communication terminal and the headset by using a sensitivity measurement signal for checking a communication status without using a separate signal. Accordingly, the headset system of the present invention can easily measure a separation distance between the mobile communication terminal and the headset, and give a loss prevention warning for the mobile communication terminal and/or headset to a user when the mobile communication terminal or the headset is out of a range of a predetermined standard distance.

The effects of the present invention are not limited to the above-described effects and other effects which are not described herein will become apparent to those skilled in the art from the following description.

### [Description of Drawings]

FIG. 1 shows a mobile communication terminal and a headset constituting a headset system having a loss prevention function according to the present invention.
FIG. 2 is a block diagram showing main components of the mobile communication terminal in the headset system having a loss prevention function according to the present invention.
FIG. 3 is a block diagram showing main components of the headset in the headset system having a loss prevention function according to the present invention.
FIG. 4 is a flowchart showing an operation for preventing loss of the mobile communication terminal or the headset of the headset system having a loss prevention function according to the present invention.

### [Mode for Invention]

Although the present invention may be variously changed and include several embodiments, particular embodiments shown in the drawings will be described in detail in a detailed description. However, it is to be understood that the present invention is not limited to the particular embodiments, and various changes, equivalences and substitutions may be made without departing from the scope and spirit of the invention.

Terms such as 'first', 'second', 'A', 'B', etc. can be used to describe various components, but the components are not limited to the terms. Terms described in the specification is used to discriminate one component from other components. For example, the first component may be called the second component without departing from the scope of the present invention. Likewise, the second component may be called the first component. The term 'and/or' includes a combination of a plurality of items or any one of a plurality of terms.

Singular forms are intended to include plural forms unless the context clearly indicates otherwise. It will be further understood that the terms "comprises" or "have" as used in this specification specify the presence of stated features, steps, operations, components, parts, or a combination thereof, but do not preclude the presence or addition of one or more other features, numerals, steps, operations, components, parts, or a combination thereof.

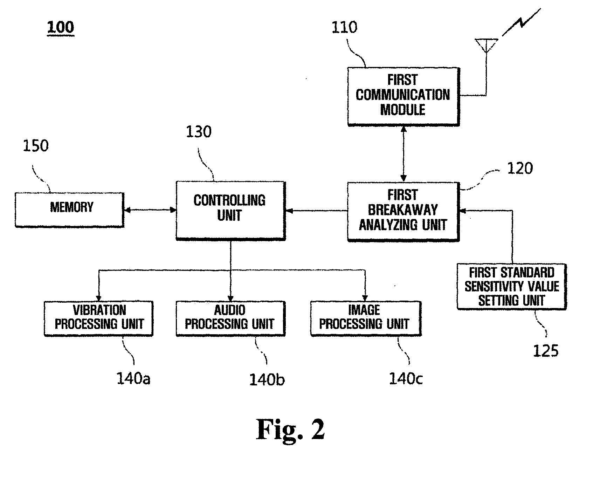

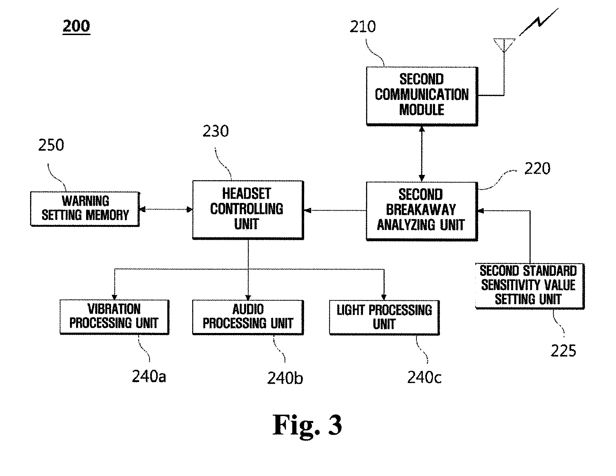

Prior to the detailed description of the drawings, it is clearly noted that the elements of the present invention herein are divided merely based on the primary functions of the elements. Accordingly, two or more elements that will be described herein may be combined into a single element, or a single element may be divided into two or more elements. Each of the elements that will be described herein may take charge of part or all of the function of another element as well as its primary function, and part of the main function of each of the elements may be performed by another element. Accordingly, the presence of each of the elements that will be described herein should be determined in terms of functionality. For this reason, the elements of the headset system having a loss prevention function of the present invention may differ from those of FIGS. 2 and 3 as long as the former elements can accomplish the objects of the present invention.

Hereinafter, a headset 200 having a mobile communication terminal loss prevention function and a headset system having a loss prevention function will be described in detail with reference to the accompanying drawings.

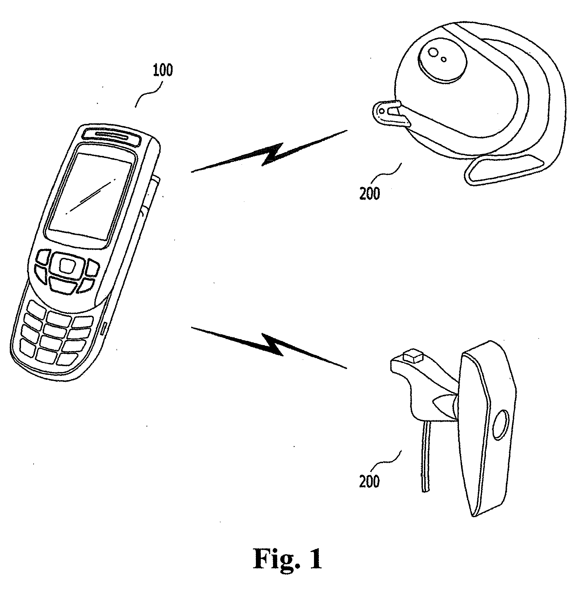

FIG. 1 shows a mobile communication terminal 100 and the headset 200 constituting the headset system having a loss prevention function according to the present invention.

As shown in FIG. 1, in the headset having a mobile communication terminal loss prevention function and the headset system having a loss prevention function according to the present invention, the mobile communication terminal and the headset are connected wirelessly. As a connection communication method, various methods may be used theoretically.

A variety of near field communication (NFC) techniques capable of transmitting and receiving data in a short range may be used. A communication method such as infrared communication (IrDA), Infrared and ZigBee may be used, and various wireless communication methods capable of transmitting and receiving a signal by forming a communication channel in a short range may be used. Further, the mobile communication terminal and the headset may be connected via wireless Internet (WiFi). However, currently, since Bluetooth communication technology is most widely used, the following description will be made based thereon.

Bluetooth is a wireless communication method based on the short range radio technology. Bluetooth operates in an industrial scientific medical (ISM) frequency band of 2.4 GHz, and may transmit voice and data at a speed of up to 1 Mbps within a range with a radius of 10 m. Since the power consumption of a Bluetooth module is very small, the scope of its utilization tends to increase rapidly.

Generally, a Bluetooth communication method of a terminal having a Bluetooth module includes inquiry for discovering Bluetooth devices (Inquiry), responses from the devices (Inquiry_res), requesting remote names from discovered devices (Remote Name Request), responses from the devices (Remote Name Request_res), requesting connection to a specific device (Page) and response (Page_res), and pairing with the device (Pairing) and response (Pairing_res).

In the present invention, the term "headset" is used, but various devices which wirelessly receive a sound signal including voice and transmit the sound signal to human ears may be used. The term "headset" used herein means a sound transmission device of various types such as a type of being inserted into one ear, a type of being inserted into both ears, and a type of wrapping the protruding ear parts. FIG. 1 exemplarily shows a headset of a type of wrapping one ear on the right side, and a headset of a type of being inserted into the ear.

Meanwhile, the mobile communication terminal to which the embodiment of the present invention can be applied is a terminal on which the Bluetooth module is mounted, and preferably includes all information communication devices such as a mobile phone, a DMB receiver, a wired/wireless telephone, a personal digital assistant (PDA), a smart phone, a DMB terminal, a laptop, a personal computer, and a GSM (Global System For Mobile Communication)/GPRS (General Packet Radio System) terminal, multimedia devices, and application systems thereof.

In the present invention, each of the mobile communication terminal 100 and the headset 200 may measure a separation distance to the other device connected wirelessly, and determine whether the other device is lost. If the device is out of a range of a predetermined standard distance, the mobile communication terminal 100 and/or the headset 200 gives a breakaway warning to a user. The separation distance between the mobile communication terminal 100 and the headset 200, on which a breakaway warning is generated based, is referred to as a standard loss distance.

The standard loss distance may be measured in various ways. For example, the mobile communication terminal 100 may transmit a distance measurement signal to the headset 200, and the headset 200 may transmit a response signal for the received distance measurement signal to the mobile communication terminal 100. The mobile communication terminal 100 may calculate an estimated separation distance between the mobile communication terminal 100 and the headset 200 by analyzing the strength of the received response signal and the like. This case is a case of using a separate signal for distance measurement.

According to the present invention, a sensitivity signal for checking a communication status is used without using a separate signal for the measurement of the separation distance. That is, according to the present invention, it is possible to measure a distance between the mobile communication terminal 100 and the headset 200 by using a signal transmitted/received between the original devices without using a separate signal. Consequently, according to the present invention, it is possible to provide the headset 200 and the headset system having a loss prevention function without requiring an additional component for measuring the distance.

In the headset system having a loss prevention function according to the present invention, each of the mobile communication terminal 100 and the headset 200, which are connected by wireless communication, may determine whether the other device is out of a range of the standard loss distance, and may transmit various types of breakaway warnings to the user if the other device is out of the range of the standard loss distance. In the case of Bluetooth communication, the mobile communication terminal 100 searches for a peripheral device capable of using Bluetooth communication by the user's operation or automatically, and determines whether the peripheral device (headset) paired by the user' selection or automatically is out of the range of the standard loss distance. Further, the headset 200 also may determine whether the mobile communication terminal 100 is out of the range of the standard loss distance, and give a breakaway warning to the user.

### Mobile communication terminal having headset loss prevention function

First, an operation of allowing the mobile communication terminal 100 to determine whether the headset 200 connected by wireless communication such as Bluetooth is out of the range of the standard loss distance will be described.

FIG. 2 is a block diagram showing main components of the mobile communication terminal 100 in the headset system having a loss prevention function according to the present invention.

The mobile communication terminal 100 in the headset system having a loss prevention function according to the present invention includes a first communication module 110 for forming a communication channel with the headset 200, a first breakaway analyzing unit 120 for analyzing whether the headset 200 is out of the range of the standard loss distance from the location of the mobile communication terminal 100 by analyzing a sensitivity signal transmitted via the first communication module 110, and a first breakaway warning unit 140 for giving a breakaway warning to the user by using at least one of a vibration signal, a sound signal and an image signal when it is analyzed in the first breakaway analyzing unit 120 that the headset 200 is out of the range of the standard loss distance.

In order to distinguish the components performing common functions between the mobile communication terminal 100 shown in FIG. 2 and the headset 200 shown in FIG. 3, the term "first" is used for the components of the mobile communication terminal 100, and the term "second" is used for the components of the headset 200.

In the headset system connected by a Bluetooth communication method, the first communication module 110 is a Bluetooth communication module, and the sensitivity signal transmitted to the first communication module 110 is a Received Signal Strength Indication (RSSI) signal.

RSSI indicates the strength of the wireless signal received from the other device, which may range from -10 to 30. If the signal has a maximum value of 30, the communication device performs a power control function to automatically adjust the value to 0 (zero). Accordingly, the most ideal value is zero.

Thus, the first breakaway analyzing unit 120 of the present invention analyzes that the headset 200 is out of the range of the standard loss distance if the value of the RSSI signal is greater than a standard sensitivity value corresponding to the standard loss distance. The above-described standard loss distance may be measured based on the standard sensitivity value.

In the general communication environment, if the separation distance between the mobile communication terminal 100 and the headset 200 is 1 m, it is assumed that, on average, the RSSI signal value is 5. If the standard loss distance was set to 1 m, the first breakaway analyzing unit 120 may determine that the headset 200 is out of the range of the standard loss distance if the value of the RSSI signal received via the first communication module 110 exceeds 5.

Since the RSSI signal is a signal for checking the reception sensitivity, it has a value which is inversely proportional to the separation distance between the mobile communication terminal 100 and the headset 200, but does not always have a constant value according to the separation distance. Therefore, it is preferable that the user sets the standard loss distance (standard sensitivity value) in the communication environment in which the headset 200 is currently used. For example, after the user separates the mobile communication terminal 100 from the headset 200 by a distance at which there is a possibility of loss, the RSSI signal value is measured. The RSSI signal value measured in this case is the standard sensitivity value. Of course, since the RSSI signal has a constant value depending on the distance in the general communications environment, the user does not necessarily need to conduct the test in order to set the standard sensitivity value.

The mobile communication terminal of the present invention may further include a first standard sensitivity value setting unit 125 for setting the standard sensitivity value. The user may arbitrarily set the standard sensitivity value corresponding to the standard loss distance via the first standard sensitivity value setting unit 125. Further, the value measured by testing the sensitivity value corresponding to the standard loss distance by the user in the communication environment in which the mobile communication terminal 100 is used may be set as the standard sensitivity value.

The first breakaway analyzing unit 120, the first breakaway warning unit 140, and the first standard sensitivity value setting unit 125 may be made in the form of a chip set mounted on the mobile communication terminal 100. Further, each component may be implemented as software in the form of an application executed on a device such as a smartphone. For example, if the application having a headset loss prevention function is executed on the smartphone, the currently paired device, i.e., the headset 200, may be retrieved, and whether a breakaway occurs may be analyzed by comparing the RSSI signal value with the standard sensitivity value.

The first breakaway warning unit 140 gives a breakaway warning to the user by using at least one of a vibration signal, a sound signal and an image signal when it is analyzed in the first breakaway analyzing unit 120 that the headset 200 is out of the range of the standard loss distance.

In FIG. 2, a vibration processing unit 140a, an audio processing unit 140b, and an image processing unit 140c included in the first breakaway warning unit 140 have been illustrated separately. In the mobile communication terminal 100, basically, a vibration motor, a speaker, a display panel and the like are provided.

The first breakaway warning unit 140 of the present invention gives a warning to the user through the vibration motor included in the vibration processing unit 140a, the speaker included in the audio processing unit 140b and the display panel included in the image processing unit 140c if it is determined that the headset 200 is out of the range of the standard loss distance by using the configuration provided in the mobile communication terminal. Further, it is possible to give a warning by combining the vibration, sound and image signals. For example, it is possible to give a warning with sound while playing a video, or give a warning by a video such as character animation.

It is preferable that various types of warnings and the user's setting are stored in a memory shown in FIG. 2. A separate memory device may be used, but it is preferable to use a memory disposed in the mobile communication terminal 100 in terms of cost. Further, a controlling unit 130 controls each of the vibration processing unit 140a, the audio processing unit 140b and the image processing unit 140c to constantly generate the set warning. Therefore, the first breakaway warning unit 140 of the present invention is configured to include the controlling unit 130, the vibration processing unit 140a, the audio processing unit 140b, the image processing unit 140c and a memory 150.

### Headset having mobile communication terminal loss prevention function

FIG. 3 is a block diagram showing main components of the headset 200 in the headset system having a loss prevention function according to the present invention.

The headset 200 having a loss prevention function for the mobile communication terminal 100 according to the present invention includes a second communication module 210 for forming a communication channel with the mobile communication terminal 100, a second breakaway analyzing unit 220 for analyzing whether the mobile communication terminal 100 is out of the range of the standard loss distance from the location of the headset 200 by analyzing a sensitivity signal transmitted via the second communication module 210, and a second breakaway warning unit 240 for giving a breakaway warning to the user when it is analyzed in the second breakaway analyzing unit 220 that the mobile communication terminal 100 is out of the range of the standard loss distance.

The configuration of the headset 200 is similar to that of the above-described mobile communication terminal 100 having a loss prevention function. The second communication module 210 is used for wireless communication connection with the mobile communication terminal 100. In the case of Bluetooth communication, a Bluetooth communication module is used as the second communication module 210. Further, the operations and functions of the second breakaway analyzing unit 220 and the second breakaway warning unit 240 are the same as or similar to those of the first breakaway analyzing unit 120 and the first breakaway warning unit 140 of the above-described mobile communication terminal 100, respectively.

In the case of Bluetooth communication, the sensitivity signal is a Received Signal Strength Indication (RSSI) signal. The second breakaway analyzing unit 220 analyzes that the mobile communication terminal 100 is out of the range of the standard loss distance if the value of the RSSI signal is greater than a standard sensitivity value corresponding to the standard loss distance. If it is determined that the mobile communication terminal 100 is out of the range of the standard loss distance, the second breakaway analyzing unit 220 transmits a signal indicating occurrence of a breakaway to the second breakaway warning unit 240 for breakaway warning. In FIG. 3, it has been illustrated that the signal is transmitted from the second breakaway analyzing unit 220 to a headset controlling unit 230.

Further, the headset 200 may further include a second standard sensitivity value setting unit 225 for setting the standard sensitivity value.

The operation and function of the second standard sensitivity value setting unit 225 are the same as or similar to those of the first standard sensitivity value setting unit 125.

However, the second breakaway warning unit 240 in the headset means a separate component disposed in the headset 200. The second breakaway warning unit 240 includes at least one of a vibration processing unit 240a for generating a vibration signal using a vibration motor, an audio processing unit 240b for generating a sound signal and outputting the sound signal from the headset, and a light processing unit 240c for generating a light signal.

If it is determined in the second breakaway analyzing unit 220 that the mobile communication terminal 100 is out of the range of the standard loss distance, the headset controlling unit gives a warning to the user by using the vibration processing unit 240a for generating a vibration signal, the audio processing unit 240b for generating a sound signal and outputting the sound signal from the headset, or the light processing unit 240c for generating a light signal. Further, it is possible to generate a warning by combining vibration, sound and light.

In the vibration processing unit, it is preferable to use a separate vibration motor disposed in the headset. In the audio processing unit, it is preferable to use a speaker basically disposed in the headset. In the light processing unit, it is preferable to use a separate light device (lamp) disposed in the headset or the like. Unlike the configuration of the mobile communication terminal 100, it is named "light processing unit" because it is preferable in the configuration of the headset to use a light element which is lighter and simpler than the display panel. However, since the light processing unit is a device capable of giving a warning to the user by using light, it may be any device that can exhibit the function.

Although a configuration of using a memory disposed in the mobile communication terminal 100 has been illustrated in the case of the mobile communication terminal 100, in the headset 200, as shown in FIG. 3, types of warnings, setting and the like are stored in a separate warning setting memory 250.

Similarly to the first breakaway warning unit 140 of the mobile communication terminal 100, the second breakaway warning unit 240 of the headset also includes the headset controlling unit 230, the vibration processing unit 240a, the audio processing unit 240b, the light processing unit 240c and the warning setting memory 250.

Further, the second breakaway warning unit 240 may make a call or send a text to the mobile communication terminal if the mobile communication terminal or the headset is out of the range of the standard loss distance. In some cases, without providing an additional warning generating device in the mobile communication terminal 100 or the headset 200, it is possible to give a breakaway warning through sound or vibration generated when receiving a text or call according to the setting of the mobile communication terminal.

### Other embodiments

Further, other embodiments of the headset system having a loss prevention function according to the present invention are possible. The mobile communication terminal 100 may include the first communication module 110 for forming a communication channel with the headset 200 and the first breakaway analyzing unit 120 for analyzing whether the headset 200 is out of the range of the standard loss distance from the location of the mobile communication terminal 100 by analyzing a sensitivity signal transmitted via the first communication module 110, and the headset 200 may include the second communication module 210 for forming a communication channel with the mobile communication terminal 100 and the second breakaway warning unit 240 for giving a breakaway warning to the user when it is analyzed in the first breakaway analyzing unit 120 that the mobile communication terminal 100 is out of the range of the standard loss distance. That is, if whether a breakaway occurs is not analyzed in the headset 200 and occurrence of a breakaway is determined in the first breakaway analyzing unit 120 of the mobile communication terminal 100, a breakaway signal is transmitted to the headset 200 to operate the second breakaway warning unit 240 of the headset.

In another embodiment, the mobile communication terminal 100 may include the first communication module 110 for forming a communication channel with the headset 200 and the first breakaway warning unit 140 for giving a breakaway warning to the user by using at least one of a vibration signal, a sound signal and an image signal, and the headset 200 may include the second communication module 210 for forming a communication channel with the mobile communication terminal 100 and the second breakaway analyzing unit 220 for analyzing whether the mobile communication terminal 100 is out of the range of the standard loss distance from the location of the headset 200 by analyzing a sensitivity signal transmitted via the second communication module 210. That is, if whether a breakaway occurs is analyzed and occurrence of a breakaway is determined in the headset 200, a breakaway signal is transmitted to the mobile communication terminal 100 to operate the first breakaway warning unit 140 of the mobile communication terminal 100. This case corresponds to the direction of a signal to the second communication module 210 from the second breakaway analyzing unit 220 in FIG. 3.

Since the standard loss distance is a reference distance at which it is determined that loss is likely to occur, the user can recognize a warning sound generated from the mobile communication terminal 100. However, it will be preferable that warning in this case is a sound signal and an image signal rather than the vibration.

The communication module is a component essential for the mobile communication terminal 100 and the headset 200. However, since the other components for performing the loss prevention function perform the same or similar functions in the mobile communication terminal 100 and the headset 200, various combinations are possible. That is, since the loss prevention function can be exhibited if all of the breakaway analyzing unit 120 (220), the breakaway warning unit 140 (240) and the standard sensitivity value setting unit 125 (225) are included, this configuration only needs to be disposed in the mobile communication terminal 100 or the headset 200.

Further, the first breakaway warning unit 140 of the mobile communication terminal and the second breakaway warning unit 240 of the headset may be operated at the same time.

Since it is preferable that the setting of the standard sensitivity value setting unit is performed in the step of pairing the mobile communication terminal 100 with the headset 200, it is preferable that the standard sensitivity value setting unit is disposed in the mobile communication terminal 100.

The type of warning generated in the mobile communication terminal and the headset, the standard value and the like may be set by an application that is executed on the mobile communication terminal.

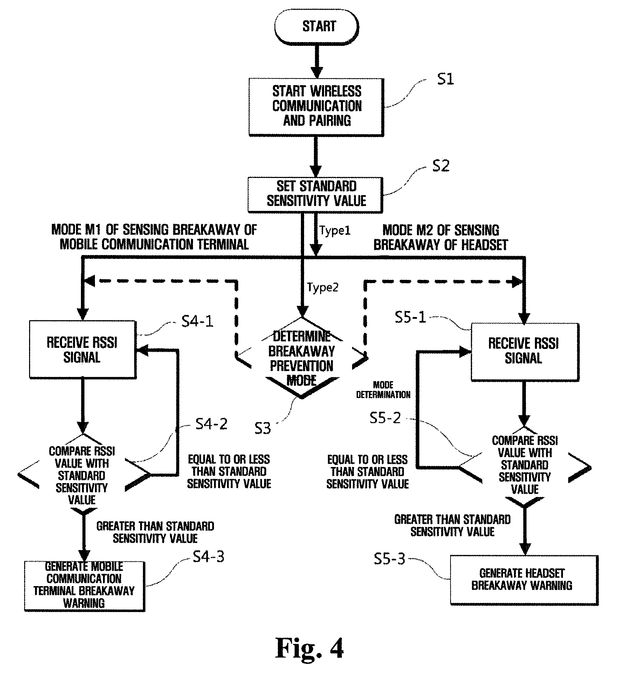

FIG. 4 is a flowchart showing an operation for preventing loss of the mobile communication terminal 100 or the headset 200 of the headset system having a loss prevention function according to the present invention.

A case of Bluetooth communication will now be described by way of example. The mobile communication terminal 100 searches for a device capable of performing Bluetooth communication, and if the headset 200 is detected, pairing is performed by the user's selection or automatically (step S1). In the present invention, by one pairing generated in this step, each of the mobile communication terminal 100 and the headset 200 may determine whether the other device is lost.

In FIG. 4, it has been illustrated that setting of the standard sensitivity value corresponding to the standard loss distance is performed in step S2. This is because it is preferable to set the standard sensitivity value after pairing. However, the standard sensitivity value does not necessarily need to be set in this step. The default value set in advance may be used, the standard sensitivity value may be set in a process of operating the loss prevention function, or the standard sensitivity value may be changed and reset in a process of operating the loss prevention function.

After setting the standard sensitivity value, the operation may be executed in, largely, two types. As shown in FIG. 4, in Type 1, 'mode M1 of sensing a breakaway of the mobile communication terminal', 'mode M2 of sensing a breakaway of the headset', or 'mode M1+M2 of sensing a breakaway of the mobile communication terminal and a breakaway of the headset' may be executed. Type 1 may vary according to the type of the headset system having a loss prevention function. There are a headset system in which only mode M1 is operated, a headset system in which only mode M2 is operated, and a headset system in which both modes M1 and M2 are simultaneously operated. That is, Type 1 is a case where the user fails to set a specific loss prevention mode, and the loss prevention mode set in the system is operated.

In Type 2, mode M1, mode M2 or mode M1+M2 is performed according to the method determined by the user in advance. Of course, even while the loss prevention function is performed, the breakaway sensing mode may be changed through the application executed on the mobile communication terminal or an input device of the headset. Type 2 is a method in which the user can set the loss prevention mode and change the type.

A procedure in the case of operating the breakaway sensing mode for the mobile communication terminal 100 has been illustrated in steps S4-1 to S4-3, and a procedure in the case of operating the breakaway sensing mode for the headset 200 has been illustrated in steps S5-1 to S5-3.

However, as described above, even if the breakaway sensing mode for the mobile communication terminal 100 is operated, finally, a breakaway warning does not necessarily need to be generated from the headset 200, and the mobile communication terminal 100 may generate a breakaway warning.

Although it has been illustrated that the headset 200 generates a breakaway warning in step S4-3, it is merely a representative example. Similarly, the headset 200 may generate a breakaway warning in step S5-3.

Although the embodiments of the present invention have been disclosed for illustrative purposes, those skilled in the art will appreciate that various modifications, additions and substitutions are possible, without departing from the scope and spirit of the invention as disclosed in the accompanying claims.

### * Descriptions of Reference Numerals *

100 : mobile communication terminal having a loss prevention function
110 : first communication module
120 : first breakaway analyzing unit
125 : first standard sensitivity value setting unit 130 : controlling unit
140 : first breakaway warning unit
140a : vibration processing unit
140b : audio processing unit 140c : image processing unit
150 : memory
200 : headset having a loss prevention function
210 : second communication module
220 : second breakaway analyzing unit
225 : second standard sensitivity value setting unit
230 : headset controlling unit
240 : second breakaway warning unit
240a : vibration processing unit
240b : audio processing unit 240c : light processing unit
250 : warning setting memory

## Claims

1. A headset having a mobile communication terminal loss prevention function, comprising:
a signal receiving unit to receive a loss prevention signal from a mobile communication terminal;
a breakaway analyzing unit to analyze whether the mobile communication terminal is out of a range of a standard loss distance from a location of the headset by analyzing the loss prevention signal; and
a breakaway warning unit to give a breakaway warning to a user when it is analyzed in the breakaway analyzing unit that the mobile communication terminal is out of the range of the standard loss distance.

2. The headset of claim 1, wherein the headset is connected to the mobile communication terminal via Bluetooth communication or wireless Internet, and the loss prevention signal is a sensitivity signal for checking a communication status of the headset and the mobile communication terminal.

3. The headset of claim 2, wherein the loss prevention signal is a Received Signal Strength Indication (RSSI) signal of Bluetooth communication.

4. The headset of claim 3, wherein the breakaway analyzing unit analyzes that the mobile communication terminal is out of the range of the standard loss distance if a value of the RSSI signal is greater than a standard sensitivity value corresponding to the standard loss distance.

5. The headset of claim 1, further comprising a standard distance setting unit to set the standard loss distance.

6. The headset of claim 1, wherein the breakaway warning unit comprises at least one of:
a vibration warning unit to generate a vibration signal by using a vibration motor;
a sound warning unit to generate a sound signal and output the sound signal from the headset; and
a light warning unit to generate a light signal.

7. A headset system having a loss prevention function, comprising a mobile communication terminal and a headset which are connected via Bluetooth communication or wireless Internet, wherein whether the mobile communication terminal or the headset is out of a range of a standard loss distance is analyzed by using a sensitivity signal for checking a communication status, and a breakaway warning is generated from the mobile communication terminal or the headset if the mobile communication terminal or the headset is out of the range of the standard loss distance.

8. The headset system of claim 7, wherein the mobile communication terminal comprises:
a first communication module to form a communication channel with the headset;
a first breakaway analyzing unit to analyze whether the headset is out of a range of a standard loss distance from a location of the mobile communication terminal by analyzing a sensitivity signal transmitted via the first communication module; and
a first breakaway warning unit to give a breakaway warning to a user by using at least one of a vibration signal, a sound signal and a light signal when it is analyzed in the first breakaway analyzing unit that the headset is out of the range of the standard loss distance.

9. The headset system of claim 8, wherein the sensitivity signal is a Received Signal Strength Indication (RSSI) signal, and the first breakaway analyzing unit analyzes that the headset is out of the range of the standard loss distance if a value of the RSSI signal is greater than a standard sensitivity value corresponding to the standard loss distance.

10. The headset system of claim 9, wherein the mobile communication terminal further comprises a first standard sensitivity value setting unit to set the standard sensitivity value.

11. The headset system of claim 10, wherein the standard sensitivity value is set by an application installed in the mobile communication terminal.

12. The headset system of claim 8, wherein operations of the first breakaway analyzing unit and the first breakaway warning unit are performed by an application installed in the mobile communication terminal.

13. The headset system of claim 7, wherein the headset comprises:
a second communication module to form a communication channel with the mobile communication terminal;
a second breakaway analyzing unit to analyze whether the mobile communication terminal is out of a range of a standard loss distance from a location of the headset by analyzing a sensitivity signal transmitted via the second communication module; and
a second breakaway warning unit to give a breakaway warning to a user when it is analyzed in the second breakaway analyzing unit that the mobile communication terminal is out of the range of the standard loss distance.

14. The headset system of claim 13, wherein the sensitivity signal is a Received Signal Strength Indication (RSSI) signal, and the second breakaway analyzing unit analyzes that the mobile communication terminal is out of the range of the standard loss distance if a value of the RSSI signal is greater than a standard sensitivity value corresponding to the standard loss distance.

15. The headset system of claim 14, wherein the headset further comprises a second standard sensitivity value setting unit to set the standard sensitivity value.

16. The headset system of claim 14, wherein the standard sensitivity value is set by an application installed in the mobile communication terminal.

17. The headset system of claim 13, wherein the second breakaway warning unit comprises at least one of:
a vibration processing unit to generate a vibration signal by using a vibration motor;
an audio processing unit to generate a sound signal and output the sound signal from the headset; and
a light processing unit to generate a light signal.

18. The headset system of claim 13, wherein the second breakaway warning unit gives a breakaway warning by generating a vibration signal, a sound signal, or an image signal in the mobile communication terminal.
